# EUROPEAN PATENT APPLICATION

(11) **EP 4 749 695 A1**
(43) Date of publication of application: **27.05.2026**
(21) Application number: 25216134.4
(22) Date of filing: 17.11.2025
(51) Int. Cl.: H01M 4/04, H01M 10/0562, H01M 10/0585, H01M 10/052

(54) **ALL-SOLID-STATE RECHARGEABLE BATTERY AND METHOD FOR MANUFACTURING ALL-SOLID-STATE RECHARGEABLE BATTERY**

(30) Priority: 22.11.2024 KR 20240168849
(71) Applicant: SAMSUNG SDI CO., LTD., Yongin-si, Gyeonggi-do 17084 (KR)
(72) Inventor: KIM, Hyunwoo, 17084 Yongin-si, Gyeonggi-do (KR)
(74) Representative: Michalski Hüttermann & Partner Patentanwälte mbB

(57) **Abstract**

An all-solid rechargeable battery includes a first electrode powder layer, a solid electrolyte powder layer disposed on the first electrode powder layer, and a second electrode powder layer disposed on the solid electrolyte powder layer.

## Description

### BACKGROUND

### (a) Field

It relates to an all-solid-state rechargeable battery and a manufacturing method of the all-solid-state rechargeable battery.

### (b) Description of the Related Art

As there is a risk of explosion in batteries using liquid electrolytes, there is development of all-solid rechargeable batteries. In all-solid rechargeable battery all the materials are solid including electrolytes. Such an all-solid rechargeable battery is safe because there is no risk of explosion due to electrolyte leakage. An all-solid rechargeable battery also has the advantage of being easy to manufacture in a thin form.

A conventional all-solid rechargeable battery includes a negative electrode, a positive electrode, and a solid electrolyte layer.

### SUMMARY

An all-solid rechargeable battery is provided that has improved battery capacity and battery performance while a metal layer of the battery is not fractured even when the metal layer is pressed into a thin film.

One aspect is to provide an all-solid rechargeable battery including: a first electrode powder layer; a solid electrolyte powder layer disposed on the first electrode powder layer; and a second electrode powder layer disposed on the solid electrolyte powder layer.

The first electrode powder layer may include a metal powder layer and a functional powder layer disposed on the metal powder layer.

The metal powder layer may be in contact with the functional powder layer, and an interface is formed between the metal powder layer and the functional powder layer with the interface including protrusions and depressions.

A thickness of the metal powder layer may be about 1 µm to about 8 µm.

The functional powder layer may include an anode active material powder layer.

The functional powder layer may include an anode coating powder layer.

The first metal powder layer is a first metal powder layer, and the first electrode powder layer may further include a second metal powder layer disposed between the functional powder layer and the solid electrolyte powder layer.

The second electrode powder layer may include a metal powder layer disposed on the solid electrolyte powder layer and a cathode active material powder layer disposed between the metal powder layer and the solid electrolyte powder layer.

The metal powder layer may be in contact with the cathode active material powder layer, and an interface is formed between the metal powder layer and the cathode active material powder layer, with the interface including protrusions and depressions.

The metal powder may be a first metal powder layer, and the second electrode powder layer may further include a second metal powder layer disposed between the cathode active material powder layer and the solid electrolyte powder layer.

One aspect is to provide a method of manufacturing an all-solid rechargeable battery, including: laminating a first electrode powder layer; laminating a solid electrolyte powder layer on the first electrode powder layer; laminating a second electrode powder layer on the solid electrolyte powder layer; and pressing the first electrode powder layer, the solid electrolyte powder layer, and the second electrode powder layer in a laminating direction.

The first electrode powder layer, the solid electrolyte powder layer, and the second electrode powder layer may be laminated in a recess portion of a tray.

The pressing the first electrode powder layer, the solid electrolyte powder layer, and the second electrode powder layer in the laminating direction may be carried out by pressing means corresponding to the recess portion of the tray.

The pressing means may include a press plate corresponding to the recess portion.

The pressing means may include a press roller corresponding to the recess portion.

The manufacturing method of the all-solid rechargeable battery may further include cutting the pressed first electrode powder layer, solid electrolyte powder layer, and second electrode powder layer into a plurality of cut-outs and laminating the plurality of cut-outs in the laminating direction.

The manufacturing method of the all-solid rechargeable battery may further include pressing the plurality of cut-outs in the laminating direction.

The pressing of the first electrode powder layer, the solid electrolyte powder layer, and the second electrode powder layer may be carried out in an inert gas atmosphere.

The laminating the first electrode powder layer may include: laminating a metal powder layer; and laminating the functional powder layer on the metal powder layer.

The laminating the second electrode powder layer may include: laminating a cathode active material powder layer on the solid electrolyte powder layer; and laminating a second metal powder layer on the cathode active material powder layer.

According to the examples, an all-solid rechargeable battery having improved battery capacity and the battery performance without fracturing occurring when a metal layer is pressed into a thin film is provided, and the method of manufacturing the all-solid rechargeable battery can also be provided.

### BRIEF DESCRIPTION OF THE DRAWINGS

FIG. 1 is a cross-sectional view of an all-solid battery.
FIG. 2 is a cross-sectional view of an all-solid-state battery including the precipitation type negative electrode.
FIG. 3 is a cross-sectional view of an all-solid rechargeable battery according to an example.
FIG. 4 is a cross-sectional view of an all-solid rechargeable battery according to another example.
FIG. 5 is a cross-sectional view of an all-solid rechargeable battery according to still another example.
FIG. 6 is a flowchart of a method of manufacturing an all-solid rechargeable battery according to an example.
FIG. 7 shows a method of manufacturing an all-solid rechargeable battery according to still another example.
FIG. 8 shows pressing means that can be used in a method of manufacturing an all-solid rechargeable battery according to another example.

### DETAILED DESCRIPTION OF THE EMBODIMENTS

Hereinafter, with reference to the accompanying drawings, various examples of the present disclosure will be described in detail such that those of ordinary skill in the art can easily carry out the present disclosure. As those skilled in the art would realize, the described examples may be modified in various different ways, all without departing from the scope of the present disclosure.

In addition, unless explicitly described to the contrary, the word "comprise", and variations such as "comprises" or "comprising", will be understood to imply the inclusion of stated elements but not the exclusion of any other elements.

In order to clearly express multiple layers and regions in the drawing, the thickness is enlarged and shown. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, the term, "layer" includes not only shapes formed on the entire surface when observed on a plane view, but also shapes formed on some surfaces. Here, "or" is not interpreted in an exclusive sense, and, for example, "A or B" is interpreted as including A, B, A B, and the like.

### Positive electrode of all-solid rechargeable battery

A positive electrode for an all-solid-state secondary battery includes a current collector and a positive electrode active material layer positioned on the current collector. The positive electrode active material layer includes at least one of a positive electrode active material, a sulfide-based solid electrolyte, a binder, and a conductive material. However, the present disclosure is not limited to such a configuration, and the positive electrode for an all-solid-state secondary battery may include more or fewer components than the components described above. The positive electrode for an all-solid-state secondary battery may be manufactured by applying a positive electrode composition including at least one of a positive electrode active material, a sulfide-based solid electrolyte, a binder, and a conductive material to a current collector, followed by drying and rolling.

### Positive electrode active material

Any positive electrode active material that is commonly used for all-solid-state secondary batteries may be used as the positive electrode active material according to the present disclosure. For example, the positive electrode active material may be a compound capable of reversible intercalation and deintercalation of lithium and may include a compound represented by any one of the following chemical formulas.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);

LiₐNi_{b}E_{c}G_{d}O₂(0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2);

LiₐFePO₄ (0.90 ≤ a ≤ 1.8).

In the above Chemical Formulas, A is selected from Ni, Co, Mn, and a combination thereof; X is selected from Al, Ni, Co, Mn, Cr, Fe, Mg, Sr, V, rare earth elements, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive electrode active material may include a lithium nickel-based oxide represented by Chemical Formula 1 below, a lithium cobalt-based oxide represented by Chemical Formula 2 below, a lithium ferrous phosphate-based compound represented by Chemical Formula 3 below, or a combination thereof.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each one or more elements independently selected from Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O2

In Chemical Formula 2, 0.9≤a2≤1.8, 0.6≤x2≤1, and M³ is one or more elements selected from Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴ 1-x3PO4

In Chemical Formula 3, 0.9≤a3≤1.8, 0.6≤x3≤1, and M⁴ is one or more elements selected from Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive electrode active material may be 1 µm to 25 µm, for example, 3 µm to 25 µm, 5 µm to 25 µm, 5 µm to 20 µm, 8 µm to 20 µm, or 10 µm to 18 µm. The positive electrode active material having an average particle diameter in these ranges can be thoroughly mixed with other components in the positive electrode active material layer and can provide for high capacity and high energy density in a secondary battery.

The positive electrode active material may be in the form of secondary particles made by agglomeration of a plurality of primary particles, or may be in the form of single particles. In addition, the particles of the positive electrode active material may be spherical or close to a spherical shape, or may be polyhedral or amorphous.

### Sulfide-Based Solid Electrolyte

The sulfide-based solid electrolyte may include, for example, Li₂S-P₂S₅, Li₂S-P₂S₅-LiX (X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each an integer, and Z is Ge, Zn, or Ga), Li₂S-GeS₂, Li₂S-SiS₂-Li₃PO₄, Li₂S-SiS₂-LiₚMO_{q} (p and q are integers, and M is P, Si, Ge, B, Al, Ga, or In), or combination thereof.

The sulfide-based solid electrolyte may be obtained by, for example, mixing Li₂S and P₂S₅ at a molar ratio of 50:50 to 90:10 or 50:50 to 80:20 and optionally heat treating the mixture. Within the these mixing ratio ranges, a sulfide-based solid electrolyte with excellent ionic conductivity can be made. Here, SiS₂, GeS₂, B₂S₃, and the like as other components may be further included to further improve the ionic conductivity.

A mechanical milling or solution method can be applied as a method of mixing sulfur-containing raw materials for producing a sulfide-based solid electrolyte. Mechanical milling is a method of making starting materials into particulates and mixing the same by putting the starting materials, ball mills, and the like in a reactor and intensely stirring the mixture. In a solution method, starting materials may be mixed in a solvent to obtain a solid electrolyte as a precipitate. Furthermore, if heat treatment is performed after mixing, crystals of the solid electrolyte can become more rigid and ionic conductivity can be improved. As an example, the sulfide-based solid electrolyte can be manufactured by mixing sulfur-containing raw materials and heat-treating the mixture two or more times. In this case, a sulfide-based solid electrolyte with high ionic conductivity and rigidity can be made.

As an example, the sulfide-based solid electrolyte particles may include argyrodite-type sulfide. The argyrodite-type sulfide may be expressed by a chemical formula of, for example, LiₐM_{b}P_{c}S_{d}Aₑ (wherein a, b, c, d, and e are all 0 or more and 12 or less, M is a metal excluding Li or a combination of a plurality of metals excluding Li, and A is F, Cl, Br, or I), and as a specific example, it may be expressed by a chemical formula of Li₇₋ₓPS₆₋ₓAₓ (wherein x is 0.2 or more and 1.8 or less, and A is F, Cl, Br, or I). The argyrodite-type sulfide may be specifically Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, or the like.

Sulfide-based solid electrolyte particles containing such argyrodite-type sulfide have a high ionic conductivity that is close to about 10⁻⁴ to about 10⁻² S/cm, which is ionic conductivity of a general liquid electrolyte at room temperature. Thus, with such a sulfide-based solid electrolyte particles a close bond can be between the positive electrode active material and the solid electrolyte. Further, a close interface can be formed between the electrode layer and the solid electrolyte layer without deteriorating the ionic conductivity. An all-solid-state battery including the same may exhibit improved battery performance such as with respect to rate characteristics, coulombic efficiency, and life characteristics.

The argyrodite-type sulfide-based solid electrolyte may be made by, for example, mixing lithium sulfide, phosphorus sulfide, and optionally lithium halide. After mixing the components, heat treatment may be performed. The heat treatment may include, for example, two or more heat treatment steps.

An average particle diameter (D50) of the sulfide-based solid electrolyte particles according to an example may be 5.0 µm or less, for example, 0.1 µm to 5.0 µm, 0.1 µm to 4.0 µm, 0.1 µm to 3.0 µm, 0.5 µm to 2.0 µm, or 0.1 µm to 1.5 µm. Alternatively, depending on location or purpose of use, the sulfide-based solid electrolyte particles may be small particles having an average particle diameter (D50) of 0.1 µm to 1.0 µm or large particles having an average particle diameter (D50) of 1.5 µm to 5.0 µm. The sulfide-based solid electrolyte particles in these particle diameter ranges can effectively penetrate between solid particles in the battery. The particles also have an excellent contact property with the electrode active material and connectivity between the solid electrolyte particles. The average particle diameter of the sulfide-based solid electrolyte particles may be measured using a microscope image. For example, a particle size distribution may be obtained by measuring sizes of about 20 particles in a scanning electron microscope image, and D50 may be calculated from the particle size distribution.

The amount of the solid electrolyte in the positive electrode for an all-solid-state battery may be 0.5 wt% to 35 wt%, for example, 1 wt% to 35 wt%, 5 wt% to 30 wt%, 8 wt% to 25 wt%, or 10 wt% to 20 wt%. These amounts are with respect to a total weight of components in the positive electrode, and specifically, may be an amount with respect to a total weight of the positive electrode active material layer.

In an example, the positive electrode active material layer may include 50 wt% to 99.35 wt% of the positive electrode active material, 0.5 wt% to 35 wt% of the sulfide-based solid electrolyte, 0.1 wt% to 10 wt% of the fluorine-based resin binder, and 0.05 wt% to 5 wt% of the vanadium oxide with respect to 100 wt% of the positive electrode active material layer. When such amounts, the positive electrode for an all-solid-state secondary battery maintains high adhesive force and also maintains the viscosity of the positive electrode composition at an appropriate level while implementing high capacity and high ionic conductivity. As a result, processability is easier.

### Binder

The binder adheres positive electrode active material particles to each other and to a current collector. Examples of the binder include, but are not limited to, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

### Conductive material

The positive electrode active material layer may further include a conductive material. The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber containing copper, nickel, aluminum, silver, and the like; a conductive polymer such as a polyphenylene derivative; or a combination thereof.

The conductive material may be included in an amount of 0.1 wt% to 5 wt%, or 0.1 wt% to 3 wt% with respect to a total weight of each component of the positive electrode for the all-solid-state battery, or with respect to a total weight of the positive electrode active material layer. Within the these ranges, the conductive material can improve electrical conductivity without causing a reduction in battery performance.

When the positive electrode active material layer further includes a conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorine-based resin binder, 0.05 wt% to 5 wt% of the vanadium oxide, and 0.1 wt% to 5 wt% of the conductive material with respect to 100 wt% of the positive electrode active material layer.

The positive electrode for a lithium secondary battery may further include an oxide-based inorganic solid electrolyte in addition to the solid electrolyte described above. The oxide-based inorganic solid electrolyte may include, for example, Li₁₊ₓTi₂₋ₓAl(PO₄)₃(LTAP)(0≤x≤4), Li_{1+x+y}AlₓTi₂₋ₓSiyP_{3-y}O₁₂(0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate(LiₓTi_{y}(PO₄)₃, 0<x<2, 0<y<3), Li_{1+x+y}(Al, Ga)ₓ(Ti, Ge)₂-ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M= Te, Nb, or Zr; where x is an integer from 1 to 10), or combination thereof.

### All-solid rechargeable battery

An embodiment of the present disclosure provides an all-solid-state secondary battery including the positive electrode described above, a negative electrode, and a solid electrolyte layer positioned between the positive electrode and the negative electrode. The all-solid-state secondary battery may also be an all-solid-state battery or an all-solid-state lithium secondary battery.

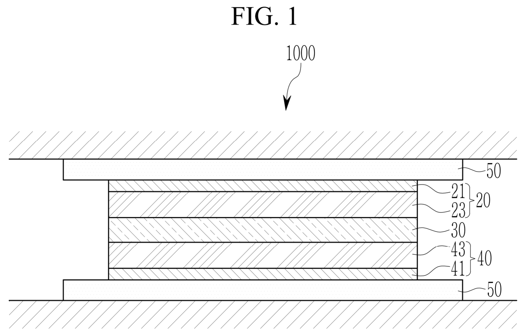

FIG. 1 is a cross-sectional view of an all-solid battery. Referring to FIG. 1, an all-solid-state secondary battery 1000 may have a structure in which an electrode assembly in which a negative electrode 40 including a negative electrode current collector 41 and a negative electrode active material layer 43, a solid electrolyte layer 30, and a positive electrode 20 including a positive electrode active material layer 23 and a positive electrode current collector 21 are laminated. The all-solid-state secondary battery 1000 may be stored in a case such as a pouch. The all-solid-state secondary battery 1000 may further include an elastic layer 50 on an outer side of at least one of the positive electrode 20 and the negative electrode 40. FIG. 1 illustrates one electrode assembly, but an all-solid battery can be made by laminating two or more electrode assemblies.

### Negative electrode

A negative electrode for an all-solid-state battery may include, as an example, a current collecting layer and a negative electrode active material layer formed on the current collecting layer. The negative electrode active material layer includes a negative electrode active material and may further include a binder, a conductive material, and/or a solid electrolyte.

The negative electrode active material may include a material capable of reversibly intercalating/deintercalating lithium ions, a lithium metal, an alloy of a lithium metal, a material capable of being doped and dedoped into lithium, or a transition metal oxide.

The material capable of reversibly intercalating/deintercalating lithium ions is a carbon-based negative electrode active material, and may include, for example, crystalline carbon, amorphous carbon, or combination thereof. An example of the crystalline carbon may include graphite such as amorphous, plate-shaped, flake-shaped, spherical, or fibrous natural graphite or artificial graphite, and an example of the amorphous carbon may include soft carbon or hard carbon, mesophase pitch carbide, fired coke, and the like.

As an alloy of a lithium metal, an alloy of lithium with one or more metals selected from Na, K, Rb, Cs, Fr, Be, Mg, Ca, Sr, Si, Sb, Pb, In, Zn, Ba, Ra, Ge, Al, and Sn may be used.

As the material capable of being doped and dedoped into lithium, a Si-based negative electrode active material or Sn-based negative electrode active material may be used. The Si-based negative electrode active material may include silicon, a silicon-carbon composite, SiOₓ (0<x<2), a Si-Q alloy. In the formula Si-Q, Q is an element selected from the group consisting of alkali metals, alkaline-earth metals, Group 13 elements, Group 14 elements, Group 15 elements, Group 16 elements, transition metals, rare earth elements, and a combination thereof, but not Si. The Sn-based negative electrode active material may include Sn, SnO₂, a Sn-R alloy, where R is an element selected from the group consisting of alkali metals, alkaline-earth metals, Group 13 elements, Group 14 elements, Group 15 elements, Group 16 elements, transition metals, rare earth elements, and a combination thereof, but not Sn), and the like, and at least one of them may be mixed with SiO₂. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be a silicon-carbon composite including, for example, a core including crystalline carbon and silicon particles and an amorphous carbon coating layer on the surface of the core. The crystalline carbon may be artificial graphite, natural graphite, or a combination thereof. As the amorphous carbon precursor, coal-based pitch, mesophase pitch, petroleum pitch, petroleum-based oil, petroleum-based heavy oil, or polymer resin such as phenol resin, furan resin, and polyimide resin may be used. Herein, the amount of silicon may be 10 wt% to 50 wt% with respect to the total weight of the silicon-carbon composite. In addition, the amount of the crystalline carbon may be 10 wt% to 70 wt% with respect to the total weight of the silicon-carbon composite, and the amount of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particles may be 10 nm to 20 µm, and for example, 10 nm to 500 nm. The silicon particles may be present in an oxidized form, in which a Si:O atom content ratio in the silicon particles showing an oxidation degree may be 99:1 to 33:67. The silicon particles may be SiOₓ particles in which an x range may be more than 0 and less than 2. Herein, the average particle diameter (D50) may be measured by a particle size analyzer using a laser diffraction method, and (D50) refers to a diameter of a particle having a cumulative volume of 50 vol% in a particle size distribution.

The Si-based negative electrode active material or Sn-based negative electrode active material may be mixed with a carbon-based negative electrode active material. A mixing ratio between the Si-based negative electrode active material or Sn-based negative electrode active material and the carbon-based negative electrode active material may be 1:99 to 90:10 as a weight ratio.

An amount of the negative electrode active material in the negative electrode active material layer may be 95 wt% to 99 wt% with respect to the total weight of the negative electrode active material layer.

In embodiments, the negative electrode active material layer further includes a binder and, optionally, a conductive material. An amount of the binder in the negative electrode active material layer may be 1 wt% to 5 wt% with respect to the total weight of the negative electrode active material layer. In addition, when the conductive material is included, the negative electrode active material layer may include 90 wt% to 98 wt% of the negative electrode active material, 1 wt% to 5 wt% of the binder, and 1 wt% to 5 wt% of the conductive material.

The binder functions to adhere the negative electrode active material particles to each other and also adhere the negative electrode active material to the current collecting layer. The binder may include a non-water-soluble binder, a water-soluble binder, or a combination thereof.

The non-water-soluble binder may include, for example, polyvinyl chloride, carboxylated polyvinyl chloride, polyvinyl fluoride, a polymer including ethylene oxide, an ethylene propylene copolymer, polystyrene, polyvinylpyrrolidone, polyurethane, polytetrafluoroethylene, polyvinylidene fluoride, polyethylene, polypropylene, polyamideimide, polyimide, or combination thereof.

The water-soluble binder may include a rubber-based binder or a polymer resin binder. The rubber-based binder may be selected from a styrene-butadiene rubber, an acrylated styrene-butadiene rubber, an acrylonitrile-butadiene rubber, an acryl rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acryl resin, a phenol resin, an epoxy resin, polyvinyl alcohol, and a combination thereof.

When the water-soluble binder is used as the negative electrode binder, a thickener capable of imparting viscosity may be used together, and the thickener may include, for example, a cellulose-based compound. The cellulose-based compound may include carboxymethyl cellulose, hydroxypropyl methyl cellulose, methyl cellulose, an alkali metal salt thereof, or a combination thereof. As the alkali metal, Na, K, or Li may be used. An amount of the thickener used may be 0.1 parts by weight to 3 parts by weight with respect to 100 parts by weight of the negative electrode active material.

The conductive material is used for imparting conductivity to an electrode, and may include, for example, a carbon-based material such as natural graphite, artificial graphite, carbon black, acetylene black, Ketjen black, carbon fiber, and carbon nanotubes; a metal-based material in a metal powder or metal fiber form including copper, nickel, aluminum, silver, and the like; a conductive polymer such as a polyphenylene derivative; or a mixture thereof.

As the negative electrode current collecting layer, a copper foil, a nickel foil, a stainless steel foil, a titanium foil, a nickel foam, a copper foam, a polymer substrate coated with a conductive metal, and a combination thereof may be used.

As another example, the negative electrode for an all-solid-state battery may be a precipitation type negative electrode. A precipitation type negative electrode refers to a negative electrode in which the negative electrode active material is not included during battery assembly, but a lithium metal and the like are precipitated during battery charge and serves as the negative electrode active material.

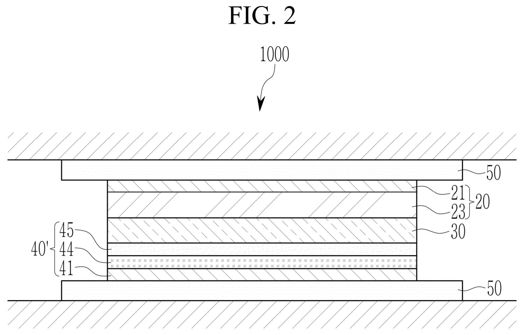

FIG. 2 is a cross-sectional view of an all-solid-state battery including the precipitation type negative electrode. Referring to FIG. 2, the precipitation type negative electrode 40' may include a current collecting layer 41 and a negative electrode coating layer 45 formed on the current collecting layer 41. In the all-solid-state battery having the precipitation type negative electrode 40', initial charge starts in the absence of the negative electrode active material, and a high-density lithium metal and the like are precipitated between the current collecting layer 41 and the negative electrode coating layer 45 during charge to form a lithium metal layer 44, which may function as the negative electrode active material. Accordingly, in the all-solid-state battery which has been charged at least once, the precipitation type negative electrode 40' may include the current collecting layer 41, the lithium metal layer 44 formed on the current collecting layer 41, and a negative electrode coating layer 45 formed on the metal layer. The lithium metal layer 44 refers to a layer in which the lithium metal and the like are precipitated during battery charge, and may be referred to as a metal layer, a negative electrode active material layer, or the like.

The negative electrode coating layer 45 may include a metal serving as a catalyst, a carbon material, or a combination thereof.

The metal may include, for example, gold, platinum, palladium, silicon, silver, aluminum, bismuth, tin, zinc, or combination thereof, and may be formed of one of these metals or various types of alloys. When the metal is present in a particle form, the average particle diameter (D50) may be about 4 µm or less, for example, 10 nm to 4 µm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, Ketjen black, or a combination thereof.

When the negative electrode coating layer 45 includes both the metal and the carbon material, a mixing ratio between the metal and the carbon material may be 1:10 to 2:1 by weight. In such a case, precipitation of the lithium metal may be effectively promoted and the characteristics of the all-solid-state battery may be improved. The negative electrode coating layer 45 may include, for example, a catalytic metal-supported carbon material, or include a mixture of metal particles and carbon material particles.

The negative electrode coating layer 45 may include a metal and an amorphous carbon as an example. In this case, precipitation of the lithium metal may be effectively promoted.

The negative electrode coating layer 45 may further include a binder, and the binder may be a conductive binder. In addition, the negative electrode coating layer 45 may further include a filler, a dispersing agent, an ion conductive agent, and the like, which are common additives.

The negative electrode coating layer 45 may have a thickness of, for example, 100 nm to 20 µm, 500 nm to 10 µm, or 1 µm to 5 µm.

The precipitation type negative electrode 40' may further include a thin film on the surface of the current collecting layer 41, that is, between the current collecting layer 41 and the negative electrode coating layer 45. The thin film may include an element capable of forming an alloy with lithium. The element capable of forming an alloy with lithium may be gold, silver, zinc, tin, indium, silicon, aluminum, bismuth, and the like, and may be formed as one of these metals or various types of alloys. The thin film may further flatten the precipitation form of the lithium metal layer 44 and may further improve the characteristics of the all-solid-state battery. The thin film may be formed by, for example, a method such as vacuum deposition, sputtering, and plating. The thin film may have a thickness of, for example, 1 nm to 500 nm.

### Solid electrolyte layer

A solid electrolyte layer 30 may include a sulfide-based solid electrolyte, an oxide-based solid electrolyte, and the like. Detailed descriptions of the sulfide-based solid electrolyte and the oxide-based solid electrolyte are as described above.

In an example, the solid electrolyte included in the positive electrode 20 and the solid electrolyte included in the solid electrolyte layer 30 may include the same compound or different compounds. When both the positive electrode 20 and the solid electrolyte layer 30 include the argyrodite type sulfide-based solid electrolyte, the overall performance of the all-solid-state secondary battery may be improved. In addition, when both the positive electrode 20 and the solid electrolyte layer 30 include the coated solid electrolyte described above, the all-solid-state secondary battery may have excellent initial efficiency and lifespan characteristics while also having high capacity and high energy density.

The average particle diameter (D50) of the solid electrolyte included in the positive electrode 20 may be smaller than the average particle diameter (D50) of the solid electrolyte included in the solid electrolyte layer 30. In such a case, lithium-ion mobility is increased while maximizing the energy density of the all-solid-state battery, thereby improving overall performance. For example, the average particle diameter (D50) of the solid electrolyte included in the positive electrode 20 may be 0.1 µm to 1.0 µm or 0.1 µm to 0.8 µm, and the average particle diameter (D50) of the solid electrolyte included in the solid electrolyte layer 30 may be 1.5 µm to 5.0 µm, 2.0 µm to 4.0 µm, or 2.5 µm to 3.5 µm. When the particle diameter ranges are satisfied, lithium-ion transfer is easily performed while the energy density of the all-solid-state secondary battery maximized while resistance is suppressed. Thus, the overall performance of the all-solid-state secondary battery may be improved. Herein, the average particle diameter (D50) of the solid electrolyte may be measured by a particle size analyzer using a laser diffraction method. Otherwise, about 20 or slightly more particles are randomly selected in a microscopic photograph measured by a scanning electron microscope and the like and the particle sizes are measured to obtain a particle size distribution, and the D50 value may be calculated therefrom.

The solid electrolyte layer may further include a binder in addition to the solid electrolyte. As the binder, a styrene butadiene rubber, polytetrafluoroethylene, polyvinylidene fluoride, polyethylene, am acrylate-based polymer, or combination thereof may be used. But the present disclosure is not limited to the examples, and any other binder used in the art may be used here. The acrylate-based polymer may be, for example, butyl acrylate, polyacrylate, polymethacrylate, or combination thereof.

The solid electrolyte layer may be formed by adding a solid electrolyte to a binder solution, coating a substrate film with the solution, and drying. The solvent for the binder solution may be isobutyl isobutyrate, xylene, toluene, benzene, hexane, or a combination thereof. Since a process for forming the solid electrolyte layer is well known in the art, a detailed description thereof will be omitted.

The solid electrolyte layer may have a thickness of, for example, 10 µm to 150 µm.

The solid electrolyte layer may further include an alkali metal salt, an ionic liquid, and/or a conductive polymer.

The alkali metal salt may be, for example, a lithium salt. An amount of the lithium salt in the solid electrolyte layer may be 1 M or more, and for example, 1 M to 4 M. In such a case, the lithium salt may improve ion conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoroborate (LlODFB), lithium difluoro(oxalato)borate (LiDFOB), lithium bis(trifluoromethanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

In addition, the lithium salt may be imide-based. For example, the imide-based lithium salt may include lithium bis(trifluoromethanesulfonyl)imide (LiTFSI, LiN(SO2CF3)2) and lithium bis(fluorosulfonyl)imide (LiFSI, LiN (SO2F)2). The lithium salt may maintain or improve ion conductivity by appropriately maintaining chemical reactivity with an ionic liquid.

Since the ionic liquid has a melting point equivalent to or lower than room temperature, iconic liquid refers to a salt that is in a liquid state at room temperature and formed of only ions or a salt melting at room temperature.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based cations, and a mixture thereof, and b) one or more anions selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more of N-methyl-N-propylpyrrolidinium bis(trifluoromethanesulfonyl)imide N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

In the solid electrolyte layer, a weight ratio between the solid electrolyte and the ionic liquid may be 0.1:99.9 to 90:10, and for example, may be 10:90 to 90:10, 20:80 to 90:10, 30:70 to 90:10, 40:60 to 90:10, or 50:50 to 90:10. The solid electrolyte layer in these ranges may have an improved electrochemical contact area with an electrode to maintain or improve ion conductivity. Accordingly, the energy density, the discharge capacity, the rate properties, and the like of the all-solid-state battery may be improved.

The all-solid-state battery may be a unit cell having a structure of positive electrode/ solid electrolyte layer/ negative electrode, a bicell having a structure of positive electrode/ solid electrolyte layer/negative electrode/ solid electrolyte layer/ positive electrode, or a laminated battery having a repeated unit cell structure.

The shape of the all-solid-state battery is not particularly limited, and may be, for example, a coin shape, a button shape, a sheet shape, a laminated shape, a cylindrical shape, a flat shape, or the like. In addition, the all-solid-state battery may also be a large battery used in electric vehicles and the like. For example, the all-solid-state battery may also be used in hybrid vehicles such as a plug-in hybrid electric vehicle (PHEV). In addition, the all-solid-state battery may be used in where a large amount of power storage is required, and for example, may be used in electric bicycles, power tools, or the like.

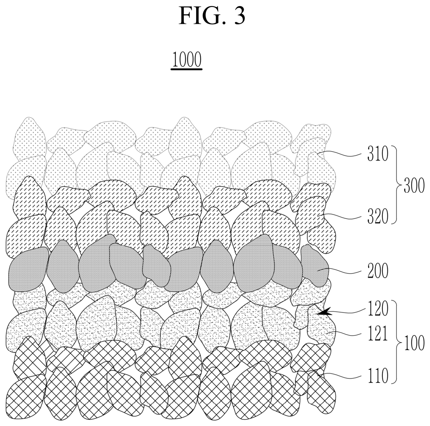

Referring to FIG. 3, an all-solid-state secondary battery according to an embodiment will be described. FIG. 3 is a cross-sectional view of an all-solid rechargeable battery according to an example. Referring to FIG. 3, an all-solid rechargeable battery may be a rechargeable battery that is capable of being repeatedly charged and discharged. In the following description, a positive electrode includes a cathode, and a negative electrode includes an anode.

The all-solid rechargeable battery 1000 includes a first electrode powder layer 100, a solid electrolyte powder layer 200, and a second electrode powder layer 300. The all-solid rechargeable battery 1000 includes an electrode assembly in which the first electrode powder layer 100, the solid electrolyte powder layer 200, and the second electrode powder layer 300 are laminated. But the present disclosure is not limited in this regard, and may further include configurations of various known all-solid rechargeable batteries, such as, a pouch, a case, and the like.

The first electrode powder layer 100, the solid electrolyte powder layer 200, and the second electrode powder layer 300 each may be formed by pressurizing powder. A particle size of the powder may be 10 nm to 10 mm, but the present disclosure is not limited thereto.

The first electrode powder layer 100 may include the negative electrode included in the above-stated all-solid rechargeable battery, but the present disclosure is not restricted in this regard. For example, the first electrode powder layer 100 may form a layer shape by pressing powders together that form the negative electrode.

The first electrode powder layer 100 may include a first metal powder layer 110 and a functional powder layer 120 disposed on the first metal powder layer 110.

The first metal powder layer 110 may be formed into a layer by pressing metal powders including the material as included in the negative electrode current collecting layer described above or metal powders including various known metal materials. The first metal powder layer 110 is in contact with the functional powder layer 120. An interface between the first metal powder layer 110 and the functional powder layer 120 may have protrusions and depressions. For example, since the first metal powder layer 110 and the functional powder layer 120 each form a layer shape by pressing the powder, the interface between the first metal powder layer 110 and the functional powder layer 120 may have protrusions and depressions. Since the first metal powder layer 110 is formed into a layer by pressing the powder, even if the first metal powder layer 110 is pressed multiple times, the first metal powder layer 110 may be a thin film that is not fractured in the pressing direction. In a specific example, the first metal powder layer 110 may have a thickness of 1µm to 8µm. In another specific exmaple, the thickness of the first metal powder layer 110 may be 2µm or less.

The functional powder layer 120 may include an anode active material powder layer 121.

The anode active material powder layer 121 may be formed into a layer shape by pressing active material powders including a material as included in the negative electrode active material layer described above or various known negative electrode active materials. The anode active material powder layer 121 is in contact with the first metal powder layer 110. An interface between the anode active material powder layer 121 and the first metal powder layer 110 may have the form of protrusions and depressions. For example, since the anode active material powder layer 121 and the first metal powder layer 110 each is formed in a layer by pressing powders of the respective layers, the interface between the anode active material powder layer 121 and the first metal powder layer 110 may have protrusions and depressions. Since each of the anode active material powder layer 121 and the first metal powder layer 110 is formed into a layer by pressing the powder of each layer, even if the anode active material powder layer 121 and the first metal powder layer 110 are pressed multiple times in the laminating direction, the anode active material powder layer 121 and the first metal powder layer 110 can be formed into a thin film that is not fractured in the laminating direction.

Pressing along the laminating direction may include, but is not limited to, pressing along a thickness direction of each layer.

The solid electrolyte powder layer 200 may be disposed on the first electrode powder layer 100. The solid electrolyte powder layer 200 may be disposed between the first electrode powder layer 100 and the second electrode powder layer 300. The solid electrolyte powder layer 200 may be formed as a laye by pressing solid electrolyte powders including a material included in the above-described solid electrolyte layer or various known solid electrolyte materials. The solid electrolyte powder layer 200 is in contact with the first electrode powder layer 100 and the second electrode powder layer 300. Interfaces between the solid electrolyte powder layer 200 and the first electrode powder layer 100 and between the solid electrolyte powder layer 200 and the second electrode powder layer 300 may have protrusions and depressions. For example, since the powder of the solid electrolyte powder layer 200, the powder of the first electrode powder layer 100, and the powder of the second electrode powder layer 300 are pressed, the interface between the solid electrolyte powder layer 200 and the first electrode powder layer 100 and the interface between the solid electrolyte powder layer 200 and the second electrode powder layer 300 may have protrusions and depressions. Since the powder of the solid electrolyte powder layer 200, the powder of the first electrode powder layer 100, and the powder of the second electrode powder layer 300 are pressed to each other such that the layers are formed, even if the solid electrolyte powder layer 200, the first electrode powder layer 100, and the second electrode powder layer 300 are pressed multiple times along the lamination direction, the solid electrolyte powder layer 200, the first electrode powder layer 100, and the second electrode powder layer 300 can be formed into a thin film that is not fractured in the laminating direction.

The second electrode powder layer 300 is disposed on the solid electrolyte powder layer 200.

The second electrode powder layer 300 may include, but is not limited to, a positive electrode as included in the all-solid rechargeable battery described above. For example, the second electrode powder layer 300 may form a layer shape by pressing powders forming the positive electrode together.

The second electrode powder layer 300 may include a second metal powder layer 310 disposed on the solid electrolyte powder layer 200 and a cathode active material powder layer 320 disposed between the second metal powder layer 310 and the solid electrolyte powder layer 200.

The second metal powder layer 310 may be formed as a layer by pressing metal powders including a material as included in the above-described positive electrode current collecting layer or various known metallic material. The second metal powder layer 310 is in contact with the cathode active material powder layer 320, and an interface between the second metal powder layer 310 and the cathode active material powder layer 320 may have protrusions and depressions. For example, since the second metal powder layer 310 and the cathode active material powder layer 320 are formed as layers by pressing the powder of each layer, the interface between the second metal powder layer 310 and the cathode active material powder layer 320 may have protrusions and depressions. Since the second metal powder layer 310 is formed as a layer by pressing the powder included therein, even if the second metal powder layer 310 is pressed multiple times, the second metal powder layer 310 can be formed as a thin film that is not fractured along the pressing direction. In a specific example, a thickness of the second metal powder layer 310 may be 1µm to 8µm. In another specific example, the thickness of the second metal powder layer 310 may be 2µm or less.

The cathode active material powder layer 320 may be formed into a layer by pressing the active material powder as including the material included in the positive electrode active material layer described above or various known positive electrode active materials. The cathode active material powder layer 320 is in contact with the second metal powder layer 310 and the solid electrolyte powder layer 200. The interface between the cathode active material powder layer 320 and the second metal powder layer 310 and the interface between the cathode active material powder layer 320 and the solid electrolyte powder layer 200 may have protrusions and depressions. For example, since the cathode active material powder layer 320, the second metal powder layer 310, and the solid electrolyte powder layer 200 are each pressed to form layers, the interface between the cathode active material powder layer 320 and the second metal powder layer 310 and the interface between the cathode active material powder layer 320 and the solid electrolyte powder layer 200 may have protrusions and depressions. Since the cathode active material powder layer 320, the second electrode powder layer 300, and the solid electrolyte powder layer 200 are each pressed to form layers, even if the cathode active material powder layer 320, the second electrode powder layer 300, and the solid electrolyte powder layer 200 are pressed multiple times in the laminating direction, the cathode active material powder layer 320, the second electrode powder layer 300, and the solid electrolyte powder layer 200 can be formed as a thin film that is not fractured in the laminating direction.

The all-solid rechargeable battery 1000 may be formed in various known laminating structures. For example, the all-solid rechargeable battery 1000 may be a unit battery having a form of positive electrode/solid electrolyte layer/negative electrode, a bicell having a structure of negative electrode/solid electrolyte layer/positive electrode/solid electrolyte layer/negative electrode, or a laminated battery structure in which the structure of the unit battery is repeated. But the present disclosure is not limited to these examples.

The all-solid rechargeable battery 1000 may include a plurality of all-solid rechargeable batteries 1000 that are laminated together. Layers of known elastic layers may be disposed between the all-solid rechargeable batteries 1000 laminated in the laminating direction. Each the elastic layer may may be formed by pressing powder containing various known elastic materials in the laminating direction.

In a conventional all-solid rechargeable battery, when an electrode current collecting layer is formed of a metal plate or metal foil, an electrode active material layer and a solid electrolyte layer needs to be joined to the electrode current collecting layer, and the electrode current collecting layer, the electrode active material layer, and the solid electrolyte layer need to be pressed in a laminating direction. Since the electrode current collecting layer of the conventional all-solid rechargeable battery is formed from a metal plate or metal foil, an interface between the electrode current collecting layer and the electrode active material layer has few protrusions and depressions, and the metal plate or metal foil may be fractured in the laminating direction when the electrode current collecting layer, the electrode active material layer, and the solid electrolyte layer are pressed multiple times. Also in the conventional all-solid rechargeable battery it is difficult to press the electrode current collecting layer, the electrode active material layer, and the solid electrolyte layer multiple times in the laminating direction due to the possibility of the electrode current collecting layer rupturing, and it is therefore difficult to form the electrode current collecting layer, the electrode active material layer, and the solid electrolyte layer into a thin film.

In contrast, in the all-solid rechargeable battery 1000 according to the present disclosure, since each of the first electrode powder layer 100, the solid electrolyte powder layer 200, and the second electrode powder layer 300 is formed by press powder, interfaces between each of the first electrode powder layer 100, the solid electrolyte powder layer 200, and the second electrode powder layer 300 may have protrusions and depressions such that the battery capacity and battery performance of the all-solid rechargeable battery 1000 can be improved. Further, powders of each of the first electrode powder layer 100, the solid electrolyte powder layer 200, and the second electrode powder layer 300 are pressed and formed into the layers. Thus, even when the first electrode powder layer 100, the solid electrolyte powder layer 200, and the second electrode powder layer 300 are pressed in the laminating direction multiple times, the first electrode powder layer 100, the solid electrolyte powder layer 200, and the second electrode powder layer 300 are formed as a thin film. And, at the same time, fracturing of the first electrode powder layer 100, the solid electrolyte powder layer 200, and the second electrode powder layer 300 can be prevented, thereby improving the battery capacity and battery performance relative to the entire volume. Thus, the all-solid rechargeable battery 1000 has improved battery capacity and battery performance and suppressed breakage of the metal layers, i.e., the first electrode powder layer 100 and the second electrode powder layer 300, by pressing them into a thin film.

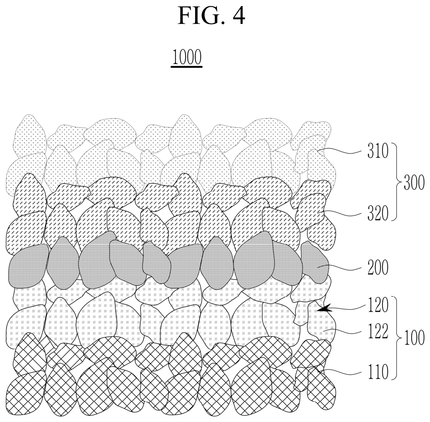

An all-solid rechargeable battery according to another example will be described with reference to FIG. 4. Hereinafter, differences from the example described above will be described.

FIG. 4 is a cross-sectional view of an all-solid rechargeable battery according to another example. Referring to FIG. 4, the all-solid rechargeable battery 1000 according to another example includes a first electrode powder layer 100, a solid electrolyte powder layer 200, and a second electrode powder layer 300.

The first electrode powder layer 100 may include the above-described precipitation type negative electrode. The first electrode powder layer 100 may include a first metal powder layer 110 and a functional powder layer 120 disposed on the first metal powder layer 110.

The functional powder layer 120 may include an anode coating powder layer 122. The anode coating powder layer 122 may be formed by pressing together the material as included in the above-described negative electrode coating layer or negative electrode coating powder included in various known negative electrode coating layers. The anode coating powder layer 122 is in contact with the first metal powder layer 110, and an interface between the anode coating powder layer 122 and the first metal powder layer 110 may have protrusions and depressions. Since the powder of each of the anode coating powder layer 122 and the first metal powder layer 110 is pressed to form the layers, the interface between the anode coating powder layer 122 and the first metal powder layer 110 may have the shape of protrusions and depressions. Since the powder of each of the anode coating powder layer 122 and the first metal powder layer 110 is pressed to form the layers, even when the anode coating powder layer 122 and the first metal powder layer 110 are pressed multiple times in the laminating direction. The anode coating powder layer 122 and the first metal powder layer 110 may be formed into a thin film while fracturing of the anode coating powder layer 122 and the first metal powder layer 110 in the laminating direction is suppressed.

In the all-solid rechargeable battery 1000, the initial charge starts in the absence of an anode active material. When charged, a lithium metal and the like precipitate between the first metal powder layer 110 and the anode coating powder layer 122 to form a lithium metal layer. The lithium metal layer may function as an anode active material.

In the all-solid rechargeable battery 1000 according to another example, the first electrode powder layer 100, the solid electrolyte powder layer 200, and the second electrode powder layer 300 are each formed by pressing powder. Thus, interfaces between the first electrode powder layer 100, the solid electrolyte powder layer 200, and the second electrode powder layer 300 may have protrusions and depressions, which improves the battery capacity and battery performance of the all-solid rechargeable battery 1000. In the all-solid rechargeable battery 1000, since the first electrode powder layer 100, the solid electrolyte powder layer 200, and the second electrode powder layer 300 are formed by pressing powder of each layer, even when the first electrode powder layer 100, the solid electrolyte powder layer 200, and the second electrode powder layer 300 are pressed multiple times in the laminating direction, the first electrode powder layer 100, the solid electrolyte powder layer 200, and the second electrode powder layer 300 are formed as a thin film. Thus, fracturing of the first electrode powder layer 100, the solid electrolyte powder layer 200, and the second electrode powder layer 300 in the laminating direction can be suppressed, thereby improving the battery capacity and battery performance relative to the entire volume of the battery.

Thus, the all-solid rechargeable battery 1000 of which the battery capacity and battery performance are improved and fracturing of the metal layer can be suppressed when the first electrode powder layer 100 and the second electrode powder layer 300 are pressed into a thin film.

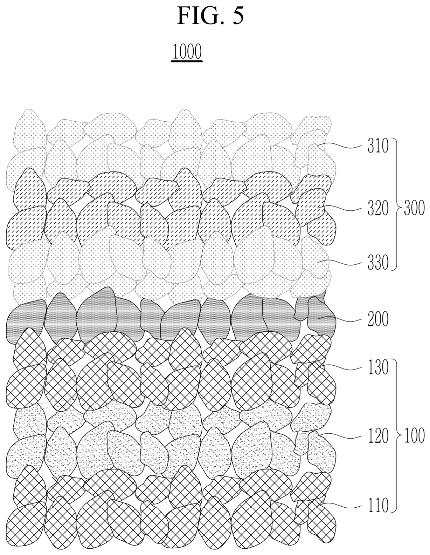

Referring to FIG. 5, an all-solid rechargeable battery according to still another example will be described. Hereinafter, differences from the examples described above will be described. FIG. 5 is a cross-sectional view of an all-solid rechargeable battery according to still another example.

Referring to FIG. 5, an all-solid rechargeable battery 1000 according to still another example includes a first electrode powder layer 100, a solid electrolyte powder layer 200, and a second electrode powder layer 300.

The first electrode powder layer 100 may include a first metal powder layer 110, a functional powder layer 120 disposed on the first metal powder layer 110, and a third metal powder layer 130 disposed between the functional powder layer 120, and the solid electrolyte powder layer 200.

The third metal powder layer 130 may be formed into a layer by pressing metal powder including the material as included in the negative electrode current collecting layer described above or various known metal materials. The third metal powder layer 130 is in contact with the functional powder layer 120 and the solid electrolyte powder layer 200. An interface between the third metal powder layer 130 and the functional powder layer 120 and an interface between the third metal powder layer 130 and the solid electrolyte powder layer 200 may include protrusions and depressions. Since the third metal powder layer 130 and the functional powder layer 120 are each formed by pressing, the interface between the third metal powder layer 130 and the functional powder layer 120 may include protrusions and depressions. Since the third metal powder layer 130 may be formed into a thin film by pressing, even when the third metal powder layer 130 is pressed multiple times, the third metal powder layer 130 may not be fractured in a pressing direction. A thickness of the third metal powder layer 130 may be 1 µm to 8 µm. More specifically, a thickness of the third metal powder layer 130 may be less than 2 µm.

The second electrode powder layer 300 may include a second metal powder layer 310 disposed on the solid electrolyte powder layer 200, a cathode active material powder layer 320 disposed between the second metal powder layer 310 and the solid electrolyte powder layer 200, and a fourth metal powder layer 330 disposed between the cathode active material powder layer 320 and the solid electrolyte powder layer 200.

The fourth metal powder layer 330 may be formed by press metal powder including the material as included in the anode current collecting layer described above or various known metal materials. The fourth metal powder layer 330 is in contact with the cathode active material powder layer 320 and the solid electrolyte powder layer 200. An interface between the fourth metal powder layer 330 and the cathode active material powder layer 320 and an interface between the fourth metal powder layer 330 and the solid electrolyte powder layer 200 may include protrusions and depressions. Since the fourth metal powder layer 330 and the cathode active material powder layer 320 are formed by pressing powder, the interface between the fourth metal powder layer 330 and the cathode active material powder layer 320 may include protrusions and depressions. Since the fourth metal powder layer 330 forms a layer shape by press the powder, even when the fourth metal powder layer 330 is pressed multiple times, the fourth metal powder layer 330 may be formed into a thin film without fracturing in the pressing direction. A thickness of the fourth metal powder layer 330 may be 1 µm to 8 µm. More specifically, a thickness of the fourth metal powder layer 330 may be less than 2 µm.

In the all-solid rechargeable battery 1000 according to the other example, the first electrode powder layer 100, the solid electrolyte powder layer 200, and the second electrode powder layer 300 are formed into layers by pressing powders. Thus, the interfaces between the first electrode powder layer 100, the solid electrolyte powder layer 200, and the second electrode powder layer 300 may include protrusions and depressions, thereby improving the battery capacity and battery performance of the all-solid rechargeable battery 1000. Since the first electrode powder layer 100, the solid electrolyte powder layer 200, and the second electrode powder layer 300 each is formed by pressing the powder, even when pressed multiple times in the laminating direction, the first electrode powder layer 100, the solid electrolyte powder layer 200, and the second electrode powder layer 300 may not fracture when being formed into thin films, thereby improving the capacity and performance of the all-solid rechargeable battery 1000 relative to the entire volume of the battery.

Accordingly, the all-solid rechargeable battery 1000 having improved battery capacity and battery performance while not having fracturing in the metal layers can be provided.

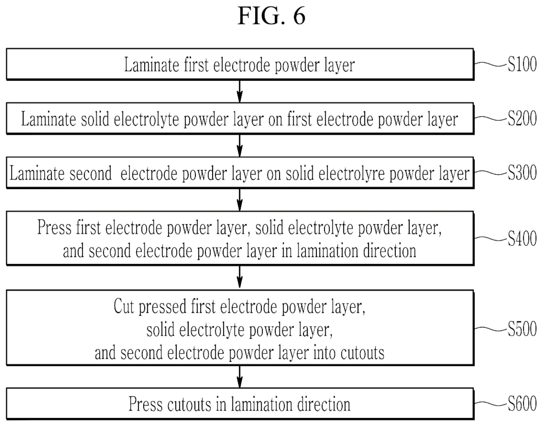

Hereinafter, referring to FIG. 6 to FIG. 8, a method of manufacturing an all-solid rechargeable battery according to another example will be described. The all-solid rechargeable battery according to the examples described above can be made using the method, but the present disclosure is not limited thereto.

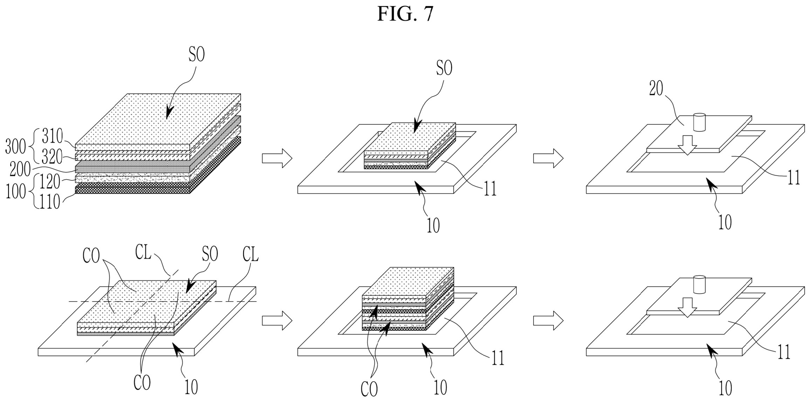

FIG. 6 is a flowchart of a method of manufacturing an all-solid rechargeable battery according to an example. FIG. 7 shows a method of manufacturing an all-solid rechargeable battery according to still another example.

Referring to FIG. 6 and to FIG. 7, first, the first electrode powder layer 100 is laminated (S100). The first metal powder layer 110 may be laminated, for example, by laminating the metal powder including the material included in the above-described negative electrode current collecting layer in a recess portion 11 of a tray 10. A coating powder including the active material powder as included in the above-described negative electrode active material layer or the material as included in the negative electrode coating layer on the first metal powder layer 110 is laminated in the recess portion 11 of the tray 10 such that the functional powder layer 120 can be laminated. The first electrode powder layer 100 including the first metal powder layer 110 and the functional powder layer 120 may be laminated in the recess portion 11 of the tray 10 by laminating the functional powder layer 120 on the first metal powder layer 110 laminated in the recess portion 11.

Next, the solid electrolyte powder layer 200 is laminated on the first electrode powder layer 100 (S200). For example, the solid electrolyte powder layer 200 may be laminated on the first electrode powder layer 100 by laminating the solid electrolyte powder including the material of the above-described solid electrolyte layer on the first electrode powder layer 100 laminated in the recess portion 11 of the tray 10.

Next, the second electrode powder layer 300 is laminated on the solid electrolyte powder layer 200 (S300). The cathode active material powder layer 320 may be laminated, for example, by laminating the active material powder including the material included in the above-described positive electrode active material layer on the first electrode powder layer 100 and the solid electrolyte powder layer 200 that are sequentially laminated on the recess portion 11 of the tray 10. The second metal powder layer 310 may be laminated by laminating the metal powder including the material as included in the above-described positive electrode current collecting layer on the cathode active material powder layer 320. The second electrode powder layer 300 including the second metal powder layer 310 and the cathode active material powder layer 320 may be laminated on the first electrode powder layer 100 and the solid electrolyte powder layer 200 that are sequentially laminated in the recess portion 11 of the tray 10. A laminate SO including the first electrode powder layer 100, the solid electrolyte powder layer 200, and the second electrode powder layer 300 may be laminated in the recess portion 11 of the tray 10.

Next, the first electrode powder layer 100, the solid electrolyte powder layer 200, and the second electrode powder layer 300 are pressed along the laminating direction (S400). For example, in an inert gas atmosphere such as argon (Ar) gas or nitrogen (N₂) gas, the laminate SO including the first electrode powder layer 100, the solid electrolyte powder layer 200, and the second electrode powder layer 300 may be pressed using a press plate 20 corresponding to the recess portion 11 of the tray 10.

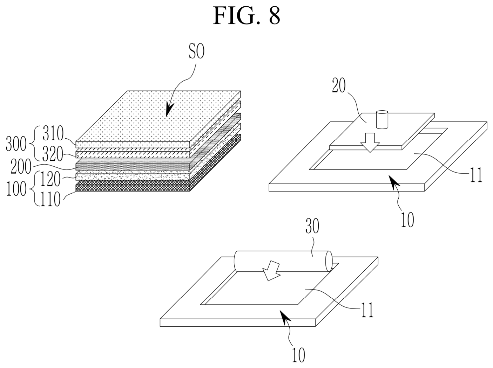

FIG. 8 shows pressing means that can be used in a method of manufacturing an all-solid rechargeable battery according to another example.

Referring to FIG. 8, the pressing means for pressing a laminated object SO including the first electrode powder layer 100, the solid electrolyte powder layer 200, and the second electrode powder layer 300 may include the press plate 20 corresponding to the recess portion 11 of the tray 10. As another example, the pressing means for pressing the laminate SO including the first electrode powder layer 100, the solid electrolyte powder layer 200, and the second electrode powder layer 300 may include a press roller 30 corresponding to the recess portion 11 of the tray 10.

Referring again to FIG. 6 and FIG. 7, the pressed first electrode powder layer 100, solid electrolyte powder layer 200, and second electrode powder layer 300 are cut into a plurality of cut-outs CO, and the plurality of cut-outs CO are laminated along the laminating direction (S500). For example, a laminated object SO including the first electrode powder layer 100, the solid electrolyte powder layer 200, and the second electrode powder layer 300 that are pressed by the pressing means is cut along a cut line CL such that a plurality of out-outs are formed. The plurality of cut-outs CO may be laminated along the laminating direction in the recess portion 11 of the tray 10.

Next, the plurality of cut-outs CO are pressed in the laminating direction (S600). For example, the plurality of cut-outs CO may be pressed using a pressing means such as a press plate 20.

The above-described process may be performed multiple times. But the present disclosure is not limited thereto.

In another example, a method of manufacturing an all-solid rechargeable battery includes laminating a first electrode powder layer 100, a solid electrolyte powder layer 200, and a second electrode powder layer 300 in powder form and press them to form layers. Thus, interfaces between each of the first electrode powder layer 100, the solid electrolyte powder layer 200, and the second electrode powder layer 300 may include protrusions and depressions, thereby improving the battery capacity and battery performance of the all-solid rechargeable battery 1000. In the all-solid rechargeable battery 1000 manufactured by the method described herein, each of the first electrode powder layer 100, the solid electrolyte powder layer 200, and the second electrode powder layer 300 is pressed to form the layers. Thus, even when the first electrode powder layer 100, the solid electrolyte powder layer 200, and the second electrode powder layer 300 are pressed multiple times in the laminating direction, the first electrode powder layer 100, the solid electrolyte powder layer 200, and the second electrode powder layer 300 may not fracture, which thereby improves the battery capacity and battery performance relative to the entire volume of the battery.

The method of manufacturing the all-solid rechargeable battery with improved battery capacity and battery performance is provided, wherein the metal layers of the electrode, that is, the first electrode powder layer 100 and the second electrode powder layer 300, are pressed into thin films without fracturing the metal layers.

While this disclosure has been described in connection with what is presently considered to be practical example, it is to be understood that the disclosure is not limited to the disclosed examples. On the contrary, it covers various modifications and equivalent arrangements.

### <Description of symbols>

first electrode powder layer 100, solid electrolyte powder layer 200, second electrode powder layer 300

## Claims

1. An all-solid rechargeable battery (1000) comprising:
a first electrode powder layer (100);
a solid electrolyte powder layer (200) disposed on the first electrode powder layer (100); and
a second electrode powder layer (300) disposed on the solid electrolyte powder layer (200).

2. The all-solid rechargeable battery (1000) as claimed in claim 1, wherein the first electrode powder layer (100) comprises:
a metal powder layer (110), preferably with a thickness of 1 µm to 8 µm, and
a functional powder layer (120) disposed on the metal powder layer (110).

3. The all-solid rechargeable battery (1000) as claimed in claim 2, wherein the metal powder layer (110) is in contact with the functional powder layer (120), and
wherein an interface is formed between the metal powder layer (110) and the functional powder layer (120) with the interface including protrusions and depressions.

4. The all-solid rechargeable battery (1000) as claimed in claims 2 or 3, wherein the functional powder layer (120) comprises an anode active material powder layer (121); or wherein the functional powder layer (120) comprises an anode coating powder layer (122).

5. The all-solid rechargeable battery (1000) as claimed in any of claims 2 to 4, wherein the metal powder layer (110) is a first metal powder layer (110), and the first electrode powder layer (100) further comprises a second metal powder layer (130) disposed between the functional powder layer (120) and the solid electrolyte powder layer (200).

6. The all-solid rechargeable battery as claimed in any of claims 1 to 5, wherein the second electrode powder layer (300) comprises:
a metal powder layer (310) of the second electrode powder layer (300) disposed on the solid electrolyte powder layer (200), and
a cathode active material powder layer (320) disposed between the metal powder layer (310) of the second electrode powder layer (300) and the solid electrolyte powder layer (200),
wherein the metal powder layer (310) of the second electrode powder layer (300) is in contact with the cathode active material powder layer (320), and
wherein an interface is formed between the metal powder layer (310) of the second electrode powder layer (300) and the cathode active material powder layer (320), with the interface including protrusions and depressions.

7. The all-solid rechargeable battery (1000) as claimed in any of claims 1 to 6, wherein the metal powder layer (310) of the second electrode powder layer (300) is a first metal powder layer (310) of the second electrode powder layer (300), and the second electrode powder layer (300) further comprising a second metal powder layer (330) of the second electrode powder layer (300) disposed between the cathode active material powder layer (320) and the solid electrolyte powder layer (200).

8. A method for manufacturing an all-solid rechargeable battery (1000), preferably for manufacturing an all-solid rechargeable battery (1000) configured according to any of the previous claims, the method comprising:
laminating a first electrode powder layer (100);
laminating a solid electrolyte powder layer (200) on the first electrode powder layer (100);
laminating a second electrode powder layer (300) on the solid electrolyte powder layer (200); and
pressing the first electrode powder layer (100), the solid electrolyte powder layer (200), and the second electrode powder layer (300) in a laminating direction.

9. The manufacturing method as claimed in claim 8, wherein the first electrode powder layer (100), the solid electrolyte powder layer (200), and the second electrode powder layer (300) are laminated in a recess portion (11) of a tray (10).

10. The manufacturing method as claimed in claims 8 or 9, wherein the pressing of the first electrode powder layer (100), of the solid electrolyte powder layer (200), and of the second electrode powder layer (300) in the laminating direction is carried out by pressing means corresponding to the recess portion (11) of the tray (10).

11. The manufacturing method as claimed in claim 10, wherein the pressing means comprises a press plate (20) corresponding to the recess portion (11); or wherein the pressing means comprises a press roller corresponding to the recess portion.

12. The manufacturing method as claimed in any of claims 8 to 11, further comprising cutting the pressed first electrode powder layer (100), solid electrolyte powder layer (200), and second electrode powder layer (300) into a plurality of cut-outs (CO) and laminating the plurality of cut-outs (CO) in the laminating direction.

13. The manufacturing method as claimed in claim 12, further comprising pressing the plurality of cut-outs (CO) in the laminating direction.

14. The manufacturing method as claimed in any of claims 8 to 13, wherein the pressing of the first electrode powder layer (100), the solid electrolyte powder layer (200), and the second electrode powder layer (300) is carried out in an inert gas atmosphere.

15. The manufacturing method as claimed in any of claims 8 to 14, wherein the laminating of the first electrode powder layer (100) comprises:
laminating a metal powder layer (110); and
laminating the functional powder layer (120) on the metal powder layer (110); and/or
wherein the laminating of the second electrode powder layer (300) comprises:
laminating a cathode active material powder layer (320) on the solid electrolyte powder layer (200); and
laminating a metal powder layer (310) of the second electrode powder layer (300) on the cathode active material powder layer (320).
